# EUROPEAN PATENT APPLICATION

(11) **EP 4 748 868 A1**
(43) Date of publication of application: **27.05.2026**
(21) Application number: 23953471.2
(22) Date of filing: 27.09.2023
(51) Int. Cl.: C08G 18/67, C08L 75/14, C08F 222/10

(54) **POLYURETHANE RESIN COMPOSITION, AND POLYURETHANE (METH)ACRYLATE RESIN HAVING CARBOXYLIC ACID GROUP AND PREPARATION METHOD THEREFOR AND USE THEREOF**

(30) Priority: 25.09.2023 CN 202311239150
(71) Applicant: Swancor Innovation & Incubation Co., Ltd., Nantou City, Nantou 54066 (TW)
(72) Inventor: KAO, Jun-Qi, Nantou City Taiwan 54066 (TW)
(74) Representative: Ter Meer Steinmeister & Partner
(86) International application number: PCT/CN2023/121884
(87) International publication number: WO 2025/065314

(57) **Abstract**

The present invention provides a polyurethane resin composition, a polyurethane (meth)acrylate resin containing a carboxylic acid group, a method for preparing the polyurethane (meth)acrylate resin containing the carboxylic acid group, a curable composition, and a composite molding material. The polyurethane resin composition includes a polyurethane resin containing multiple isocyanate groups, a (meth)acrylate containing a hydroxyl group, and a monohydric alcohol containing a carboxylic acid group. The monohydric alcohol containing the carboxylic acid group is selected from hydroxyethyl maleate, (2-hydroxyethoxy)ethyl maleate, or 2-hydroxypropyl maleate. The polyurethane (meth)acrylate resin containing the carboxylic acid group is formed by subjecting the polyurethane resin composition to a condensation reaction, and in the condensation reaction, a hydroxyl group of the monohydric alcohol containing the carboxylic acid group and the hydroxyl group of the (meth)acrylate containing the hydroxyl group are reacted with the isocyanate groups of the polyurethane resin containing the isocyanate groups. The composite molding material includes the polyurethane (meth)acrylate resin containing the carboxylic acid group, a fiber material, and a chemical thickener.

## Description

### FIELD

The present invention relates to a polyurethane (meth)acrylate resin for use in a composite material, such as a sheet molding compound or a bulk molding compound, and particularly to a polyurethane (meth)acrylate resin containing a carboxylic acid group and a polyurethane resin composition for forming the polyurethane (meth)acrylate resin containing the carboxylic acid group.

### BACKGROUND

Composite materials, such as sheet molding compound (abbreviated as SMC) and bulk molding compound (abbreviated as BMC), are widely utilized in various field, such as parts of transportation vehicles (e.g., automobiles, ships, aircraft, etc.), sporting goods, construction supplies, or furniture supplies, etc., due to their excellent properties (e.g., heat resistance, chemical corrosion resistance, etc.).

An unsaturated polyester glass fiber-reinforced molding compound is a type of the composite materials which includes an unsaturated polyester resin, a glass fiber, and a chemical thickener (e.g., magnesium oxide or calcium oxide, etc.). Through the interaction between the chemical thickener and the unsaturated polyester resin, a state of the unsaturated polyester glass fiber-reinforced molding compound changes from low viscosity (high fluidity) to high viscosity (no fluidity), exhibiting a thickening phenomenon. When the unsaturated polyester glass fiber-reinforced molding compound is subjected to compression molding under high-temperature pressing condition, the interaction between the chemical thickener and the unsaturated polyester resin will disappear, causing the state of the unsaturated polyester glass fiber-reinforced molding compound to be able to change from no fluidity to high fluidity, and thus can be operable during the compression molding process. Due to having fluidity, a molded product is less prone to poor appearance problems such as pinhole defects, etc. However, the unsaturated polyester glass fiber-reinforced molding compound has a problem of poor mechanical properties (such as toughness).

To solve the aforesaid problem, a polyurethane (meth)acrylate resin is adopted to replace the unsaturated polyester resin. The polyurethane (meth)acrylate resin is formed by reacting an isocyanate group-containing polyurethane resin with a hydroxyl group-containing (meth)acrylate. Nevertheless, the polyurethane (meth)acrylate resin does not have the property of reacting with the chemical thickener, so that a composite material thus formed does not exhibit a thickening phenomenon; at the same time, when a compression molding process is performed under high-temperature pressing conditions, lack of fluidity can easily lead to a molded product having poor appearance problems such as pinhole defects, etc.

### SUMMARY

In a first aspect, the present invention provides a polyurethane resin composition.

The polyurethane resin composition of the present disclosure includes a polyurethane resin containing multiple isocyanate groups (-N=C=O), a (meth)acrylate containing a hydroxyl group (-OH), and a monohydric alcohol containing a carboxylic acid group (-COOH). The monohydric alcohol containing the carboxylic acid group is selected from hydroxyethyl maleate, (2-hydroxyethoxy)ethyl maleate, 2-hydroxypropyl maleate, or combinations thereof.

In the polyurethane resin composition of the present invention, the (meth)acrylate containing the hydroxyl group is selected from hydroxyethyl acrylate, hydroxyethyl methacrylate, hydroxypropyl acrylate, hydroxypropyl methacrylate, or combinations thereof.

In the polyurethane resin composition of the present invention, an equivalent ratio of a sum of a hydroxyl group content of the (meth)acrylate containing the hydroxyl group and a hydroxyl group content of the monohydric alcohol containing the carboxylic acid group to an isocyanate group content of the polyurethane resin containing the multiple isocyanate groups ranges from 1:1 to 1.05:1.

In a second aspect, the present invention provides a polyurethane (meth)acrylate resin containing a carboxylic acid group.

In the polyurethane (meth)acrylate resin containing the carboxylic acid group of the present invention, the polyurethane (meth)acrylate resin containing the carboxylic acid group is formed by subjecting the aforesaid polyurethane resin composition to a condensation reaction, in which a hydroxyl group of the monohydric alcohol containing the carboxylic acid group and the hydroxyl group of the (meth)acrylate containing the hydroxyl group are reacted with the multiple isocyanate groups of the polyurethane resin containing the multiple isocyanate groups.

In the polyurethane (meth)acrylate resin containing the carboxylic acid group of the present invention, the polyurethane (meth)acrylate resin containing the carboxylic acid group has an acid value ranging from 10 mgKOH/g to 40 mgKOH/g.

In a third aspect, the present invention provides a polyurethane (meth)acrylate resin containing a carboxylic acid group.

The polyurethane (meth)acrylate resin containing the carboxylic acid group of the present invention is shown as follows: 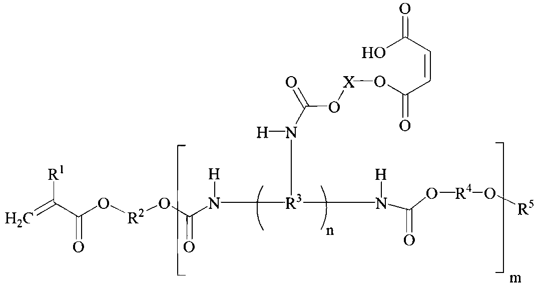 wherein
R¹ is hydrogen or a methyl group;
each of R², R³ and R⁴ is an organic group;
R⁵ is 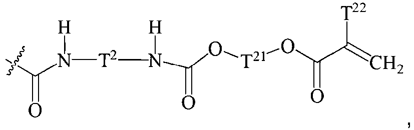 where T² is an organic group containing an isocyanate group or an organic group not containing an isocyanate group, T²¹ is an organic group, and T²² is hydrogen or a methyl group; and
X is -CH₂-CH₂-, -CH₂-CH₂-O-CH₂-CH₂-, or 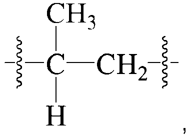 where each of m and n is not lower than 1.

In the polyurethane (meth)acrylate resin containing the carboxylic acid group of the present invention, R³ is 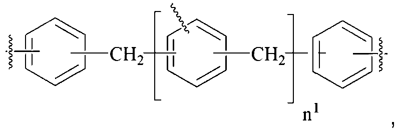 where n¹ is not lower than 1.

In the polyurethane (meth)acrylate resin containing the carboxylic acid group of the present invention, R² is an alkyl group.

In the polyurethane (meth)acrylate resin containing the carboxylic acid group of the present invention, each of R⁴ and T²¹ is an alkyl group or an alkyl ether.

In the polyurethane (meth)acrylate resin containing the carboxylic acid group of the present invention, the polyurethane (meth)acrylate resin containing the carboxylic acid group has an acid value ranging from 10 mgKOH/g to 40 mgKOH/g.

In a fourth aspect, the present invention provides a method for preparing a polyurethane (meth)acrylate resin containing a carboxylic acid group.

The method for preparing the polyurethane (meth)acrylate resin containing the carboxylic acid group of the present invention includes a step of: subjecting a hydroxyl group of a monohydric alcohol containing a carboxylic acid group and a hydroxyl group of a (meth)acrylate containing the hydroxyl group to a condensation reaction with multiple isocyanate groups of a polyurethane resin containing the multiple isocyanate groups. The monohydric alcohol containing the carboxylic acid group is selected from hydroxyethyl maleate, (2-hydroxyethoxy)ethyl maleate, 2-hydroxypropyl maleate, or combinations thereof.

In the method for preparing the polyurethane (meth)acrylate resin containing the carboxylic acid group of the present invention, the monohydric alcohol containing the carboxylic acid group and the (meth)acrylate containing the hydroxyl group are mixed to obtain a mixture, and then the mixture is subjected to the condensation reaction with the polyurethane resin containing the multiple isocyanate groups.

In the method for preparing the polyurethane (meth)acrylate resin containing the carboxylic acid group of the present invention, the (meth)acrylate containing the hydroxyl group is reacted with the polyurethane resin containing the multiple isocyanate groups to obtain a reaction mixture, and then the monohydric alcohol containing the carboxylic acid group is reacted with the reaction mixture.

In the method for preparing the polyurethane (meth)acrylate resin containing the carboxylic acid group of the present invention, the method for preparing the polyurethane (meth)acrylate resin containing the carboxylic acid group further comprises subjecting a reaction component of a polyol material and a polyisocyanate material to a polycondensation reaction, so as to obtain the polyurethane resin containing the multiple isocyanate groups.

In the method for preparing the polyurethane (meth)acrylate resin containing the carboxylic acid group of the present invention, the method for preparing the polyurethane (meth)acrylate resin containing the carboxylic acid group further comprises subjecting a diol to a reaction with maleic anhydride, so as to obtain the monohydric alcohol containing the carboxylic acid group. The diol is selected from ethylene glycol, diethylene glycol, or glycerol.

In the method for preparing the polyurethane (meth)acrylate resin containing the carboxylic acid group of the present invention, the (meth)acrylate containing the hydroxyl group is selected from hydroxyethyl acrylate, hydroxyethyl methacrylate, hydroxypropyl acrylate, hydroxypropyl methacrylate, or combinations thereof.

In a fifth aspect, the present invention provides a curable composition.

The curable composition of the present invention includes the aforesaid polyurethane (meth)acrylate resin containing the carboxylic acid group, and at least one polymerizable diluent monomer.

In the curable composition of the present invention, the polymerizable diluent monomer is selected from methyl acrylate, methyl methacrylate, ethyl acrylate, ethyl methacrylate, hydroxyethyl acrylate, hydroxyethyl methacrylate, hydroxypropyl acrylate, hydroxypropyl methacrylate, isobornyl acrylate, isobornyl methacrylate, cyclohexyl acrylate, cyclohexyl methacrylate, tetrahydrofurfuryl acrylate, tetrahydrofurfuryl methacrylate, styrene, methylstyrene, vinyltoluene, or combinations thereof.

In a sixth aspect, the present invention provides a composite molding material.

The composite molding material of the present invention includes a resin component, at least one fiber material, and at least one chemical thickener. The resin component is selected from the aforesaid polyurethane (meth)acrylate resin containing the carboxylic acid group or the aforesaid curable composition.

In the composite molding material of the present invention, the chemical thickener is selected from an alkaline earth metal oxide, an alkaline earth metal hydroxide, or a combination thereof.

The beneficial effect of the present invention is that the carboxylic acid group of the polyurethane (meth)acrylate resin containing the carboxylic acid group of the present invention can interact with the chemical thickener, so that the state of the polyurethane (meth)acrylate resin containing the carboxylic acid group can change from low viscosity (high fluidity) to high viscosity (no fluidity), thereby exhibiting a thickening phenomenon; and when the composite molding material including the polyurethane (meth)acrylate resin containing the carboxylic acid group is subjected to a compression molding process under high-temperature pressing conditions, the state can also change from no fluidity to high fluidity, and thus can be operable during the compression molding process, and due to having fluidity, a molded product is less prone to poor appearance problems such as pinhole defects, etc.

### BRIEF DESCRIPTION OF THE DRAWINGS

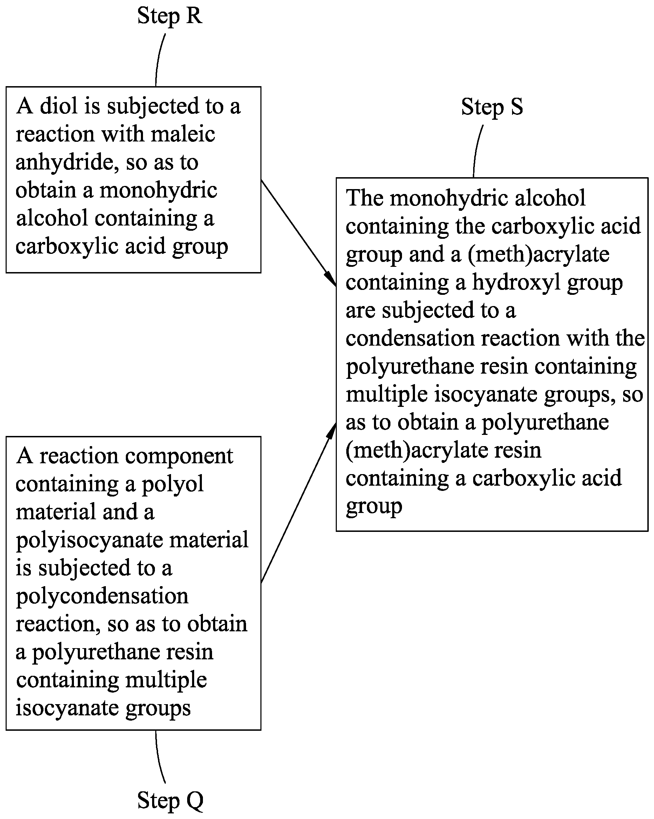

FIG. 1 is a flow chart illustrating a method for preparing a polyurethane (meth)acrylate resin containing a carboxylic acid group of the present invention.

### DETAILED DESCRIPTION OF THE EMBODIMENTS

The present invention will be described in detail below.

### <Polyurethane resin composition>

The polyurethane resin composition includes a polyurethane resin containing multiple isocyanate groups (-N=C=O), a (meth)acrylate containing a hydroxyl group, and a monohydric alcohol containing a carboxylic acid group (-COOH). The monohydric alcohol containing the carboxylic acid group (-COOH) is selected from hydroxyethyl maleate 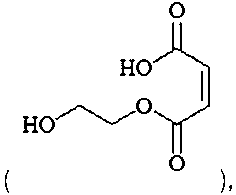 (2-hydroxyethoxy)ethyl maleate 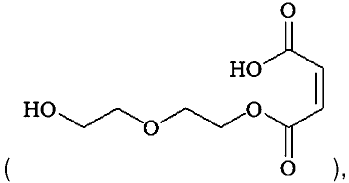 2-hydroxypropyl maleate 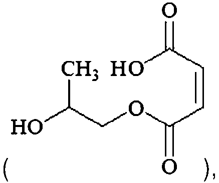 or combinations thereof.

The polyurethane resin containing the multiple isocyanate groups is, for example, but not limited to 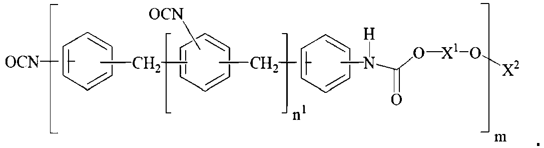 X¹ is an organic group, X² is 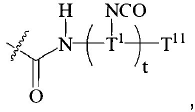 T¹ is an aromatic group, T¹¹ is hydrogen or -NCO, and each of m, n¹, and t is not lower than 1. Each of m, n¹, and t may be adjusted according to a required ratio of the isocyanate groups of the polyurethane resin containing the multiple isocyanate groups (-N=C=O) to hydroxyl groups of the (meth)acrylate containing the hydroxyl group and the monohydric alcohol containing the carboxylic acid group (-COOH). The aromatic group is, for example, but not limited to, a phenyl group, 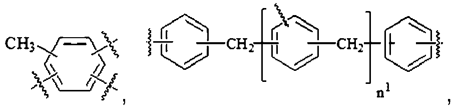 where n¹ is not lower than 1, 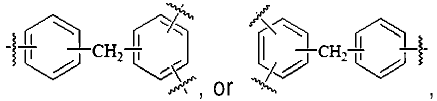 etc. In the present invention, (meth)acrylate refers to acrylate or methacrylate. The (meth)acrylate containing the hydroxyl group can be used alone or in combination with multiple types. In addition, the (meth)acrylate containing the hydroxyl group is, for example, but not limited to, hydroxyethyl acrylate, hydroxyethyl methacrylate, hydroxypropyl acrylate, or hydroxypropyl methacrylate. In some embodiments of the present invention, the (meth)acrylate containing the hydroxyl group is selected from hydroxyethyl acrylate, hydroxyethyl methacrylate, hydroxypropyl acrylate, hydroxypropyl methacrylate, or combinations thereof.

In some embodiments of the present invention, an equivalent ratio of a sum of a hydroxyl group content of the (meth)acrylate containing the hydroxyl group and a hydroxyl group content of the monohydric alcohol containing the carboxylic acid group to an isocyanate group content of the polyurethane resin containing the multiple isocyanate groups ranges from 1:1 to 1.05:1.

### <Polyurethane (meth)acrylate resin containing carboxylic acid group and preparation method thereof>

Referring to FIG. 1, the method for preparing a polyurethane (meth)acrylate resin containing a carboxylic acid group includes step S. In step S, in the aforesaid polyurethane resin composition, a hydroxyl group of the monohydric alcohol containing the carboxylic acid group and the hydroxyl group of the (meth)acrylate containing the hydroxyl group are subjected to a condensation reaction with the multiple isocyanate groups of the polyurethane resin containing the multiple isocyanate groups so as to form the polyurethane (meth)acrylate resin containing the carboxylic acid group.

In an embodiment, in step S, the monohydric alcohol containing the carboxylic acid group and the (meth)acrylate containing the hydroxyl group are mixed, so as to obtain a mixture, and then the mixture and the polyurethane resin containing the multiple isocyanate groups are subjected to the condensation reaction. In another embodiment, in step S, the (meth)acrylate containing the hydroxyl group is reacted with the polyurethane resin containing multiple isocyanate groups, so as to obtain a reaction mixture, and then the monohydric alcohol containing the carboxylic acid group is reacted with the reaction mixture.

Referring to FIG. 1, in some embodiments of the present invention, the method for preparing the polyurethane (meth)acrylate resin containing the carboxylic acid group of the present invention further includes step Q.

In step Q, a reaction component containing at least one polyol material and at least one polyisocyanate material are subjected to a polycondensation reaction to obtain the polyurethane resin containing the multiple isocyanate groups. The polyisocyanate material is an isocyanate compound containing two or more isocyanate groups, and the polyol material is a polyol compound containing two or more hydroxyl groups.

In some embodiments of the present invention, in order for the polyurethane resin containing the multiple isocyanate groups to have appropriate rigidity, an equivalent ratio of an isocyanate group content of the polyisocyanate material to a hydroxyl group content of the polyol material is 1.5:1 to 10:1. In some embodiments of the present invention, in order for the polyurethane resin containing the multiple isocyanate groups to have appropriate rigidity, the polyol material is a polyol having a number-average molecular weight of less than 2000. The polyol having the number-average molecular weight of less than 2000 is, for example, but not limited to, polypropylene glycol, polyoxyethylene ether, polyoxypropylene ether, or polytetrahydrofuran, and the like. The polyisocyanate material is, for example, but not limited to, an aromatic polyisocyanate and the like. The aromatic polyisocyanate is, for example, but not limited to, toluene diisocyanate, polymethylene polyphenyl isocyanate, or diphenylmethane diisocyanate, and the like. In some embodiments of the present invention, the polyisocyanate material is selected from toluene diisocyanate, polymethylene polyphenyl isocyanate, or diphenylmethane diisocyanate. The polyisocyanate material is, for example, but not limited to, a commercial product purchased from TOSOH with model number MR200, a commercial product purchased from WANHUA with model number PM200, a commercial product purchased from BASF with model number M20S, a commercial product purchased from Covestro with model number 44V20, a commercial product purchased from HUNTSMAN with model number 5005, a commercial product purchased from TOSOH with model number NM, or a commercial product purchased from WANHUA with model number MDI-50.

In some embodiments of the present invention, the reaction component further includes a catalyst. The catalyst is, for example, but not limited to, an organotin catalyst, an organobismuth catalyst, or an organozinc catalyst, and the like. The organotin catalyst is, for example, but not limited to, dibutyltin dilaurate. In some embodiments of the present invention, based on 1 kg of a total amount of the polyurethane (meth)acrylate resin containing the carboxylic acid group, an amount of the catalyst is 50 mg to 200 mg.

In some embodiments of the present invention, the reaction component further contains an inhibitor. The inhibitor may be an inhibitor conventionally used in a free radical curing system resin, such as 2,5-dihydroxytoluene, and thus will not be further described.

In some embodiments of the present invention, the reaction component further contains a diluent monomer. The diluent monomer is, for example, but not limited to, methyl acrylate, methyl methacrylate, ethyl acrylate, ethyl methacrylate, hydroxyethyl acrylate, hydroxyethyl methacrylate, hydroxypropyl acrylate, hydroxypropyl methacrylate, isobornyl acrylate, isobornyl methacrylate, cyclohexyl acrylate, cyclohexyl methacrylate, tetrahydrofurfuryl acrylate, tetrahydrofurfuryl methacrylate, styrene, methylstyrene, or vinyltoluene, and the like.

In detail, the polyisocyanate material, the catalyst, the inhibitor and the diluent monomer are mixed to obtain a mixture, and subsequently, the mixture is mixed with the polyol material to obtain the reaction component.

Referring to FIG. 1, in some embodiments of the present invention, the method for preparing the polyurethane (meth)acrylate resin containing the carboxylic acid group of the present invention further includes step R. In step R, a diol and maleic anhydride is subjected to a reaction to obtain the monohydric alcohol containing the carboxylic acid group. The diol is selected from ethylene glycol, diethylene glycol, or glycerol. The reaction of step R is performed via a stepwise temperature increase.

In detail, the diol and the maleic anhydride are subjected to a first-stage reaction under the condition of a first temperature, and then the first temperature is increased to a second temperature, and a second-stage reaction is performed under the condition of the second temperature. In some embodiments of the present invention, the first temperature is 50°C to 70°C. In some embodiments of the present invention, the first temperature is 55°C to 65°C. In some embodiments of the present invention, the second temperature is 70°C to 90°C. In some embodiments of the present invention, the second temperature is 75°C to 85°C.

In some embodiments of the present invention, the polyurethane (meth)acrylate resin containing the carboxylic acid group is, 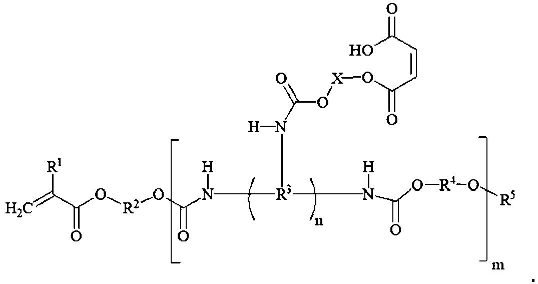 R¹ is hydrogen or a methyl group, R² is an organic group, R³ is an organic group, R⁴ is an organic group, R⁵ is 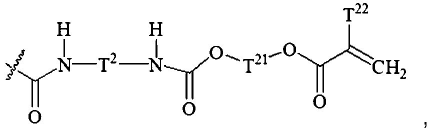 X is -CH₂-CH₂-, -CH₂-CH₂-O-CH₂-CH₂-, or 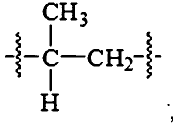 T² is an organic group containing an isocyanate group or an organic group not containing an isocyanate group, T²¹ is an organic group, T²² is hydrogen or a methyl group, and each of m and n is not lower than 1.

In order for the polyurethane (meth)acrylate resin containing the carboxylic acid group to have an appropriate acid value, thereby being able to have a better thickening effect and allowing a composite molding material formed from the polyurethane (meth)acrylate resin containing the carboxylic acid group to have lower water absorption, preferably, m/n is 1.8 to 3. The organic group of R² is, for example, an alkyl group. The alkyl group is, for example, an ethyl group or a propyl group.

The organic group of R³ is an organic group containing an aromatic group. The organic group containing the aromatic group is, for example, a phenyl group, 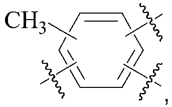 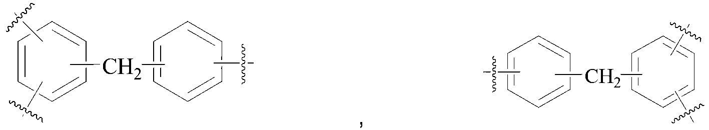 or 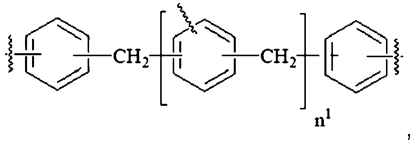 where n¹ is not lower than 1.

The organic group containing the isocyanate group is, for example, a phenyl group containing an isocyanate group, 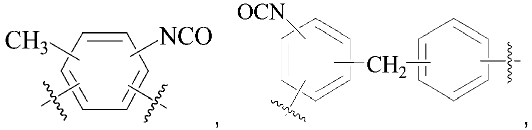 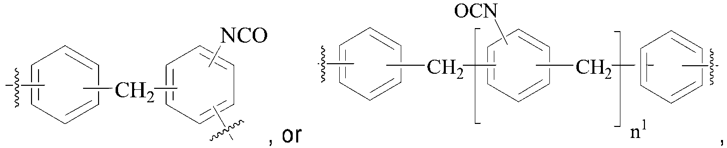 where n¹ is not lower than 1. The organic group not containing the isocyanate group is, for example, a phenyl group, 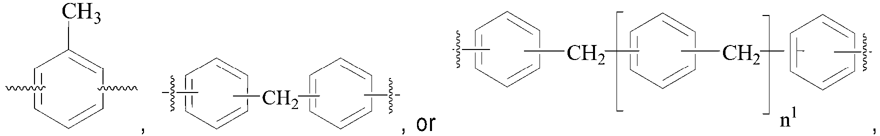 where n¹ is not lower than 1.

The organic group of each of R⁴ and T²¹ is, for example, an alkyl group, an alkenyl group, or an alkyl ether group. The alkyl group is, for example, an ethyl group or a propyl group. The alkenyl group is, for example, an allyl group. The alkyl ether group is, for example, but not limited to, -C₂H₄-O-C₂H₄-, -C₃H₆-O-C₃H₆-, or -C₄H₈-O-C₄H₈-, and the like.

In some embodiments of the present invention, 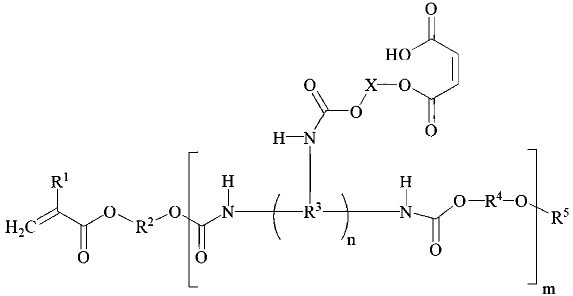 is 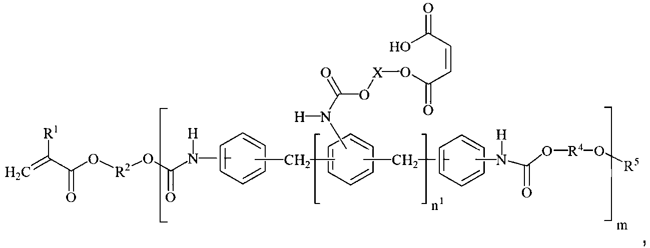 where R¹ is a methyl group, R² is an alkyl group, R⁴ is an alkyl ether group, and R⁵ is 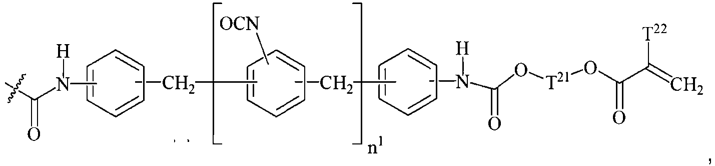 **where** T²¹ is an alkyl ether group, T²² is a methyl group, and each of m and n¹ is not lower than 1.

In some embodiments of the present invention, in order to accelerate an interaction between the polyurethane (meth)acrylate resin containing the carboxylic acid group and a chemical thickener and to reduce water absorption of the composite molding material, an acid value of the polyurethane (meth)acrylate resin containing the carboxylic acid group ranges from 10 mgKOH/g to 40 mgKOH/g. In some embodiments of the present invention, the acid value of the polyurethane (meth)acrylate resin containing the carboxylic acid group ranges from 15 mgKOH/g to 30 mgKOH/g.

### <Curable composition>

The curable composition includes the aforesaid polyurethane (meth)acrylate resin containing the carboxylic acid group, and a polymerizable diluent monomer.

In the present invention, the polymerizable diluent monomer serves as a viscosity modifier, causing the curable composition to have an appropriate viscosity to impart the curable composition with appropriate fluidity, thereby being able to meet the conditions required for subsequent operations. The polymerization diluent monomer is, for example, but not limited to, methyl acrylate, methyl methacrylate, ethyl acrylate, ethyl methacrylate, hydroxyethyl acrylate, hydroxyethyl methacrylate, hydroxypropyl acrylate, hydroxypropyl methacrylate, isobornyl acrylate, isobornyl methacrylate, cyclohexyl acrylate, cyclohexyl methacrylate, tetrahydrofurfuryl acrylate, tetrahydrofurfuryl methacrylate, styrene, methylstyrene, or vinyltoluene, and the like. In some embodiments of the present invention, the polymerizable diluent monomer is selected from methyl acrylate, methyl methacrylate, ethyl acrylate, ethyl methacrylate, hydroxyethyl acrylate, hydroxyethyl methacrylate, hydroxypropyl acrylate, hydroxypropyl methacrylate, isobornyl acrylate, isobornyl methacrylate, cyclohexyl acrylate, cyclohexyl methacrylate, tetrahydrofurfuryl acrylate, tetrahydrofurfuryl methacrylate, styrene, methylstyrene, vinyltoluene, or any combination of the above.

### <Composite molding material>

The composite molding material includes a resin component, at least one fiber material, and at least one chemical thickener. The resin component is selected from the aforesaid polyurethane (meth)acrylate resin containing the carboxylic acid group or the aforesaid curable composition.

In some embodiments of the present invention, based on a total amount of the resin component as 100 parts by weight, a total amount of the fiber material is 67 parts by weight to 135 parts by weight. The fiber material is, for example, but not limited to, a glass fiber, a carbon fiber, or a polyamide fiber, and the like. In some embodiments of the present invention, the fiber material is selected from the glass fiber, the carbon fiber, or the polyamide fiber.

In some embodiments of the present invention, based on a total amount of the resin component as 100 parts by weight, a total amount of the chemical thickener is 1 part by weight to 1.5 parts by weight. The chemical thickener is, for example, but not limited to, an alkaline earth metal oxide or an alkaline earth metal hydroxide, and the like. In some embodiments of the present invention, the chemical thickener is selected from the alkaline earth metal oxide, the alkaline earth metal hydroxide, or any combination of the above. The alkaline earth metal oxide is, for example, but not limited to, magnesium oxide or calcium oxide, and the like. The alkaline earth metal hydroxide is, for example, but limited to, magnesium hydroxide or calcium hydroxide, and the like.

In some embodiments of the present invention, the composite molding material further includes at least one inorganic filler. The inorganic filler is, for example, but not limited to, titanium dioxide, silicon dioxide, calcium carbonate, aluminum oxide, aluminum hydroxide, or silicon carbide, and the like. In some embodiments of the present invention, the inorganic filler is selected from titanium dioxide, silicon dioxide, calcium carbonate, aluminum oxide, aluminum hydroxide, or silicon carbide.

In some embodiments of the present invention, the composite molding material further includes at least one additive. The additive is, for example, but not limited to, a flame retardant, an inhibitor, a mold release agent, a hardener, a viscosity modifier, a wetting and dispersing agent, or a low-shrinkage additive, and the like. In some embodiments of the present invention, based on a total amount of the resin component as 100 parts by weight, a total amount of the flame retardant is 220 parts by weight to 300 parts by weight. The flame retardant is, for example, but not limited to, aluminum hydroxide. In some embodiments of the present invention, based on a total amount of the resin component as 100 parts by weight, a total amount of the inhibitor is 0.01 parts by weight to 0.03 parts by weight. The inhibitor is, for example, but not limited to, 2,6-di-tert-butyl-4-methylphenol. In some embodiments of the present invention, based on a total amount of the resin component as 100 parts by weight, a total amount of the mold release agent is 3 parts by weight to 5 parts by weight. The mold release agent is, for example, but not limited to, zinc stearate. In some embodiments of the present invention, based on a total amount of the resin component as 100 parts by weight, a total amount of the hardener is 3 parts by weight to 4 parts by weight. The hardener is, for example, but not limited to, tert-butyl peroxybenzoate. In some embodiments of the present invention, based on a total amount of the resin component as 100 parts by weight, a total amount of the viscosity modifier is 30 parts by weight to 40 parts by weight. The viscosity adjuster is, for example, but not limited to, a diluent monomer. The diluent monomer is, for example, but not limited to, styrene. In some embodiments of the present invention, based on a total amount of the resin component as 100 parts by weight, a total amount of the wetting and dispersing agent is 2 parts by weight to 3 parts by weight. The wetting and dispersing agent is, for example, but not limited to, a commercial product under the brand BYK Additives & Instruments (Germany) with model number BYK-W 996. In some embodiments of the present invention, based on a total amount of the resin component as 100 parts by weight, a total amount of the low-shrinkage additive is 13 parts by weight to 28 parts by weight. The low-shrinkage additive is, for example, but not limited to, vinyl acetate.

The composite molding material can be used for parts of transportation vehicles (e.g., automobiles, ships, airplanes, etc.), sporting goods, building supplies, or furniture supplies, etc.

The present invention will be further described with reference to the following examples, but it should be understood that the examples are for illustrative purposes only and should not be construed as limiting the implementation of the present invention.

### <Synthesis Example 1> Hydroxyethyl Maleate

391.3 g of ethylene glycol and 562.0 g of maleic anhydride were placed into a reaction kettle, and a molar ratio of the ethylene glycol to the maleic anhydride was 1.10. After that, the mixture was heated to 55°C and a first-stage reaction was performed under the condition of 55°C for 60 minutes. Subsequently, the temperature was increased to 70°C and a second-stage reaction was performed under the condition of 70°C for 300 minutes to obtain hydroxyethyl maleate.

### <Synthesis Example 2> (2-Hydroxyethoxy)ethyl Maleate

116.7 g of diethylene glycol and 98.1 g of maleic anhydride were placed into a reaction kettle, and a molar ratio of the diethylene glycol to the maleic anhydride was 1.10. After that, the mixture was heated to 55°C and a first-stage reaction was performed under the condition of 55°C for 60 minutes. Subsequently, the temperature was increased to 80°C and a second-stage reaction was performed under the condition of 80°C for 300 minutes to obtain (2-hydroxyethoxy)ethyl maleate.

### <Synthesis Example 3> 2-Hydroxypropyl Maleate

443.9 g of propylene glycol and 520.0 g of maleic anhydride were placed into a reaction kettle, and a molar ratio of the propylene glycol to the maleic anhydride was 1.10. After that, the mixture was heated to 55°C and a first-stage reaction was performed under the condition of 55°C for 60 minutes. Subsequently, the temperature was increased to 80°C and a second-stage reaction was performed under the condition of 80°C for 300 minutes to obtain 2-hydroxypropyl maleate.

### <Example 1> Polyurethane Methacrylate Resin Containing Carboxylic Acid Group(s) and Curable Composition

640.0 g of polymethylene polyphenyl isocyanate (Brand: TOSOH; Model: MR200; isocyanate group content of 31.25% ± 0.75%; 4.76 equivalents of isocyanate group content), 0.82 g of 2,5-dihydroxytoluene (serving as an inhibitor), and 0.308 g of dibutyltin dilaurate (serving as a catalyst) were dispersed in 412 g of methyl methacrylate (serving as a diluent monomer), followed by mixing uniformly and then heating to 50°C ± 2°C to obtain a first mixture.

317.5 g of polypropylene glycol (Brand: Oriental Union Chemical Corp.; Model: PPG400; Average molecular weight: 400; 1.59 equivalents of hydroxyl group content in 317.5 g of the polypropylene glycol) was slowly added dropwise to the first mixture over a dropwise addition time of 50 minutes ± 10 minutes, and during the dropwise addition process, the temperature was controlled at 54°C ± 6°C, and an equivalent ratio of isocyanate groups of the polymethylene polyphenyl isocyanate to hydroxyl groups of the polypropylene glycol was 3:1. Subsequently, the condition was maintained at 50°C ± 2°C for 2.5 hours ± 0.5 hours to obtain a second mixture of a polyurethane resin containing multiple isocyanate groups.

A third mixture was slowly added dropwise into the second mixture over a dropwise addition time of 50 minutes ± 10 minutes, and during the dropwise addition process, the temperature was controlled at 50°C ± 5°C. The third mixture contained 340.8 g of hydroxyethyl methacrylate and 127.1 g of the hydroxyethyl maleate of Synthesis Example 1, and an equivalent ratio of a hydroxyl group content of the third mixture to an isocyanate group content of the polyurethane resin containing the multiple isocyanate groups was 1.05. Then, the condition was maintained at 50°C ± 2°C for 2.5 hours ± 0.5 hours, and the isocyanate group content was measured during the process. When the isocyanate group content was 0.67%, 206 g of methyl methacrylate (serving as a polymerizable diluent monomer) was added to obtain a curable composition. The curable composition included a polyurethane methacrylate resin containing carboxylic acid group(s) and the methyl methacrylate, and the curable composition had a viscosity of 1600 cps, and an acid value of 21 mgKOH/g.

### <Example 2> Polyurethane Methacrylate Resin Containing Carboxylic Acid Group(s) and Curable Composition

150.0 g of polymethylene polyphenyl isocyanate (Brand: WANHUA; Model: PM200; isocyanate group content: 31.25% ± 0.75%; 1.12 equivalents of isocyanate group content in 150.0 g of the polymethylene polyphenyl isocyanate), 0.21 g of 2,5-dihydroxytoluene (serving as an inhibitor), and 0.08 g of dibutyltin dilaurate (serving as a catalyst) were dispersed in 90.0 g of methyl methacrylate (serving as a diluent monomer), followed by mixing uniformly and then heating to 50°C ± 2°C to obtain a first mixture.

74.4 g of polypropylene glycol (Brand: Oriental Union Chemical Corp.; Model: PPG400; Average molecular weight: 400; 0.37 equivalents of hydroxyl group content in 74.4 g of the polypropylene glycol) was slowly added dropwise to the first mixture, the dropwise addition time was 50 minutes ± 10 minutes, and during the dropwise addition process, the temperature was controlled at 54°C ± 6°C, and an equivalent ratio of the isocyanate groups of the polymethylene polyphenyl isocyanate to the hydroxyl groups of the polypropylene glycol was 3:1. Then, the condition was maintained at 50°C ± 2°C for 2.5 hours ± 0.5 hours to obtain a second mixture of a polyurethane resin containing multiple isocyanate groups.

A third mixture was slowly added dropwise into the second mixture over a dropwise addition time of 50 minutes ± 10 minutes, and during the dropwise addition process, the temperature was controlled at 50°C ± 5°C or below. The third mixture contained 72.6 g of hydroxyethyl methacrylate and 38.0 g of the (2-hydroxyethoxy)ethyl maleate of Synthesis Example 2, and an equivalent ratio of a hydroxyl group content of the third mixture to an isocyanate group content of the polyurethane resin containing the multiple isocyanate groups was 1.03. Then, the condition was maintained at 50°C ± 2°C for 2.5 hours ± 0.5 hours, and the isocyanate group content was measured during the process. When the isocyanate group content was 0.48%, 90.0 g of methyl methacrylate (serving as a polymerizable diluent monomer) was added to obtain a curable composition. The curable composition included a polyurethane methacrylate resin containing carboxylic acid group(s) and the methyl methacrylate, and the curable composition had a viscosity of 2600 cps, and an acid value of 20 mgKOH/g.

### <Example 3> Polyurethane Methacrylate Resin Containing Carboxylic Acid Group(s) and Curable Composition

640.0 g of polymethylene polyphenyl isocyanate (Brand: WANHUA; Model: PM200; isocyanate group content: 31.25% ± 0.75%; 4.76 equivalents of isocyanate group content in 640.0 g of the polymethylene polyphenyl isocyanate), 0.83 g of 2,5-dihydroxytoluene (serving as an inhibitor), and 0.308 g of dibutyltin dilaurate (serving as a catalyst) were dispersed in 412.0 g of methyl methacrylate (serving as a diluent monomer), followed by mixing uniformly and then heating to 50°C ± 2°C to obtain a first mixture.

317.5 g of polypropylene glycol (Brand: Oriental Union Chemical Corp.; Model: PPG400; Average molecular weight: 400; 1.59 equivalents of hydroxyl group content in 317.5 g of the polypropylene glycol) was slowly added dropwise to the first mixture over a dropwise addition time of 50 minutes ± 10 minutes, and during the dropwise addition process, the temperature was controlled at 54°C ± 6°C, and an equivalent ratio of the isocyanate groups of the polymethylene polyphenyl isocyanate to the hydroxyl groups of the polypropylene glycol was 3:1. Then, the condition was maintained at 50°C ± 2°C for 2.5 hours ± 0.5 hours to obtain a second mixture of a polyurethane resin containing multiple isocyanate groups.

A third mixture was slowly added dropwise into the second mixture over a dropwise addition time of 50 minutes ± 10 minutes, and during the dropwise addition process, the temperature was controlled at 50°C ± 5°C. The third mixture contained 340.8 g of hydroxyethyl methacrylate and 138.2 g of the 2-hydroxypropyl maleate of Synthesis Example 3, and an equivalent ratio of a hydroxyl group content of the third mixture to an isocyanate group content of the polyurethane resin containing multiple isocyanate groups was 1.02. Then, the condition was maintained at 50°C ± 2°C for 2.5 hours ± 0.5 hours, and measurement of isocyanate group content was performed during the process. When the isocyanate group content was 0.23%, 206.0 g of methyl methacrylate (serving as a polymerizable diluent monomer) was added to obtain a curable composition. The curable composition included a polyurethane methacrylate resin containing carboxylic acid group(s) and the methyl methacrylate, and the curable composition had a viscosity of 1900 cps, and an acid value of 22 mgKOH/g.

### Evaluation Items

### Measurement of viscosity (unit: cps):

The curable composition of each of Examples 1 to 3 was placed in a viscosity measuring instrument (Brand: BROOKFIELD; Model: DV-I Prime; including a viscometer, a thermostatic water bath circulation tank, and an S14 rotor), and the temperature was controlled at 25°C by the thermostatic water bath circulation tank, and detection was performed under the condition of 100 rpm.

### Measurement of acid value (unit: mqKOH/q):

0.6 g ± 0.1 g of the polyurethane methacrylate resin containing the carboxylic acid group(s) and the curable composition of each of Examples 1 to 3 was dissolved in 10 mL of a solvent component (including toluene and isopropanol, and the weight ratio of the toluene to the isopropanol was 1:1). Then, a phenolphthalein indicator was added dropwise, and titration was performed with a 0.1 N ethanolic potassium hydroxide solution.

### Measurement of isocyanate group content (unit: %):

0.25 g ± 0.05 g of the polyurethane resin containing the multiple isocyanate group and the polyurethane methacrylate resin containing the carboxylic acid group(s) of each of Examples 1 to 3 was dissolved in 15 mL of a component (including di-n-butylamine and toluene, and in the component, the concentration of the di-n-butylamine was 0.1 N). Then, the reaction was performed with continuous stirring for 10 minutes. Next, a bromophenol blue indicator was added dropwise, and titration was performed with a 0.1 N aqueous hydrochloric acid solution until the endpoint.

### Measurement of thickening property:

100 parts by weight of the curable composition of each of examples 1 to 3 and 1 part by weight of magnesium oxide were introduced into a high-shear disperser, and subjected to a shear dispersion treatment at a rotation speed of 1000 rpm for 10 minutes. Then, the mixture was left to stand in an environment of 23°C ± 1°C for 0 days, 3 days, 6 days, and 13 days, and measurement of viscosity was performed using a viscosity measuring instrument (Brand: BROOKFIELD; Model: DV-I Prime). The measurement results were shown in Table 1.

**Table 1**

| | | | | |
|---|---|---|---|---|
| Curable composition (part(s) by weight) | Example 1 | 100 | 0 | 0 |
| | Example 2 | 0 | 100 | 0 |
| | Example 3 | 0 | 0 | 100 |
| Chemical thickener (part(s) by weight) | Magnesium oxide | 1 | 1 | 1 |
| Viscosity at 23°C ± 1°C (cps) | 0 days | 1825 | 2900 | 2225 |
| | 3 days | 6900 | 10250 | 8100 |
| | 6 days | 15700 | 22500 | 19813 |
| | 13 days | 58750 | 70750 | 68750 |

Referring to Table 1, the viscosity of the curable composition of each of Examples 1 to 3 increased with increasing storage days, indicating that the polyurethane methacrylate resin containing the carboxylic acid group(s) of the present invention can indeed interact with the chemical thickener, resulting in an increase in viscosity, and thus has a thickening effect.

### Charpy impact test:

The curable composition of each of Examples 1 to 3 was uniformly mixed with 0.015 wt% ± 0.005 wt% of cobalt isooctanoate and 1.5 wt% ± 0.5 wt% of methyl ethyl ketone peroxide (1% - 2%), followed by conducting a defoaming treatment, so as to obtain a mixture. The mixture was poured into a glass mold with a thickness of 4 mm, and subjected to a curing reaction at room temperature for 24 hours. Subsequently, a baking treatment was performed at 105°C for 2 hours, so as to obtain a cured cast plate. The cured cast plate was cut into a test specimen of 80 mm × 10 mm × 4 mm, and testing was conducted using an impact tester (Brand: Cometech; Model: QC-639) according to the ISO 179 Unnotched Impact Strength of Plastics test standard. An unsaturated polyester resin (Brand: REICHHOLD; Model: POLYLITE 413-000) was uniformly mixed with 0.015 wt% ± 0.005 wt% of cobalt isooctanoate and 1.5 wt% ± 0.5 wt% of methyl ethyl ketone peroxide, and the above process was repeated, and subjected to detection using the impact tester. The test results were shown in Table 2.

**Table 2**

| | Unsaturated polyester resin | Example 1 | Example 2 | Example 3 |
|---|---|---|---|---|
| Charpy impact strength (kJ/m²) | 7.5 ± 2.5 | 24 | 22 | 25 |

Referring to Table 2, the impact strength of the test specimen formed from the curable composition obtained in each of Examples 1 to 3 was significantly superior to that of the test specimen formed from the unsaturated polyester resin, indicating that the polyurethane methacrylate resin containing the carboxylic acid group(s) of the present invention can indeed achieve better performance in terms of toughness enhancement.

### <Application Example 1> Composite Molding Material

100 parts by weight of the curable composition of Example 1, 38 parts by weight of styrene (serving as a viscosity modifier), 28 parts by weight of vinyl acetate (serving as a low-shrinkage additive), 0.03 parts by weight of 2,6-di-tert-butyl-4-methylphenol (serving as an inhibitor), 3 parts by weight of an acid group-containing copolymer solution (serving as a wetting and dispersing agent; Brand: BYK Additives & Instruments (Germany); Model: BYK-W 996), 3 parts by weight of tert-butyl peroxybenzoate (serving as a hardener), and 1.5 parts by weight of magnesium oxide (serving as a chemical thickener) were placed in a high-shear disperser and stirred for 5 minutes. Then, 300 parts by weight of aluminum hydroxide (serving as a flame retardant) was divided into several equal portions and added in batches. Subsequently, stirring was performed at a speed of 1000 rpm for 10 minutes to obtain a mixture. Next, the mixture, 3 parts by weight of zinc stearate (serving as a mold release agent), and 108 parts by weight of a carbon fiber (size: 1 cm) were introduced into a twin-shaft kneader to obtain a halogen-free flame-retardant bulk composite molding material. The halogen-free flame-retardant bulk composite molding material was introduced into a mold of a compression molding machine, and a compression molding treatment was performed on the halogen-free flame-retardant lumped composite molding material under the condition of 150°C and a pressure of 50 kg/cm² to obtain a molded product.

### <Application Examples 2 and 3>

The preparation method of Application Examples 2 to 3 were substantially the same as that of Application Example 1, with the main difference being the change in types or amounts of the components, as shown in Table 3.

**Table 3**

| Halogen-free flame-retardant bulk composite molding material | | Apalication Example | | |
|---|---|---|---|---|
| | | 1 | 2 | 3 |
| Curable composition | Example 1 | 100 | 0 | 0 |
| | Example 2 | 0 | 100 | 0 |
| | Example 3 | 0 | 0 | 100 |
| Styrene | | 38 | 30 | 35 |
| Vinyl acetate | 28 | 25 | 13 | |
| BYK-W 996 | 3 | 2.8 | 2.7 | |
| Tert-butyl peroxybenzoate | 3 | 3 | 3 | |
| 2,6-di-tert-butyl-4-methylphenol | 0.03 | 0.02 | 0.01 | |
| Magnesium oxide | 1.5 | 1 | 1.3 | |
| Aluminum hydroxide | 300 | 240 | 220 | |
| Zinc stearate | 3 | 3 | 3 | |
| Carbon fiber | 108 | 135 | 67 | |

### Evaluation Items

### Measurement of average flexural strength (unit: MPa):

In accordance to the ISO 14125 standard, the molded products of each of Application Examples 1 to 3 was cut into five test samples each with a dimension of 100 mm × 15 mm × 3 mm. Then, the flexural strengths of the test samples were measured using a universal tensile testing machine (Brand: Instron; Model: 5892), and the average value of the flexural strengths was calculated.

### Measurement of flame retardancy:

The molded product of each of Application Examples 1 to 3 was cut into five test specimens each having a dimension of 127 mm × 12.7 mm × 3 mm. Then, the test specimens were tested using a vertical burning method, in which each test specimen was contacted with a flame for 10 seconds, followed by removal from the flame, and measurement of the first afterflame time. Subsequently, each test specimen was contacted with the flame for another 10 seconds, followed by removal from the flame, and measurement of the second afterflame time. The first afterflame time and the second afterflame time were then summed to obtain a total time, and was determined to meet the V0 level when the total time was less than 10 seconds.

**Table 4**

| Molded product | Application Example | | |
|---|---|---|---|
| | 1 | 2 | 3 |
| Average flexural strength (MPa) | 92 | 102 | 98 |
| Flame retardancy | V0 | V0 | V0 |

Referring to Table 4, the molded products of Application Examples 1 to 3 possessed good flexural strength that meets industry requirements, indicating that the components in the composite molding material could indeed be uniformly mixed, which results in the molded products having good properties.

In summary, the polyurethane (meth)acrylate resin containing the carboxylic acid group of the present invention is able to interact with the chemical thickener, causing the state to change from low viscosity (high fluidity) to high viscosity (no fluidity), thereby exhibiting a thickening phenomenon. In addition, when the composite molding material including the polyurethane (meth)acrylate resin containing the carboxylic acid group is subjected to a compression molding treatment under high-temperature pressing conditions, the state can also change from no fluidity to high fluidity, and thus can be operable during the compression molding process. Moreover, due to the fluidity, the components in the composite molding material can be uniformly mixed, resulting in molded products with good quality. Therefore, the objectives of the present invention can indeed be achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

While the disclosure has been described in connection with what is(are) considered the exemplary embodiment(s), it is understood that this disclosure is not limited to the disclosed embodiment(s) but is intended to cover various arrangements included within the spirit and scope of the broadest interpretation so as to encompass all such modifications and equivalent arrangements.

## Claims

1. A polyurethane resin composition, comprising:
a polyurethane resin containing multiple isocyanate groups, a (meth)acrylate containing a hydroxyl group, and a monohydric alcohol containing a carboxylic acid group, the monohydric alcohol containing the carboxylic acid group being selected from hydroxyethyl maleate, (2-hydroxyethoxy)ethyl maleate, 2-hydroxypropyl maleate, or combinations thereof.

2. The polyurethane resin composition as claimed in claim 1, wherein the (meth)acrylate containing the hydroxyl group is selected from hydroxyethyl acrylate, hydroxyethyl methacrylate, hydroxypropyl acrylate, hydroxypropyl methacrylate, or combinations thereof.

3. The polyurethane resin composition as claimed in claim 1, wherein an equivalent ratio of a sum of a hydroxyl group content of the (meth)acrylate containing the hydroxyl group and a hydroxyl group content of the monohydric alcohol containing the carboxylic acid group to an isocyanate group content of the polyurethane resin containing the multiple isocyanate groups ranges from 1:1 to 1.05:1.

4. A polyurethane (meth)acrylate resin containing a carboxylic acid group, wherein the polyurethane (meth)acrylate resin containing the carboxylic acid group is formed by subjecting the polyurethane resin composition as claimed in any one of claims 1 to 3 to a condensation reaction, in which a hydroxyl group of the monohydric alcohol containing the carboxylic acid group and the hydroxyl group of the (meth)acrylate containing the hydroxyl group undergo the condensation reaction with the multiple isocyanate groups of the polyurethane resin containing the multiple isocyanate groups.

5. The polyurethane (meth)acrylate resin containing the carboxylic acid group as claimed in claim 4, wherein the polyurethane (meth)acrylate resin containing the carboxylic acid group has an acid value ranging from 10 mgKOH/g to 40 mgKOH/g.

6. A polyurethane (meth)acrylate resin containing a carboxylic acid group, wherein the polyurethane (meth)acrylate resin containing the carboxylic acid group is shown as follows: 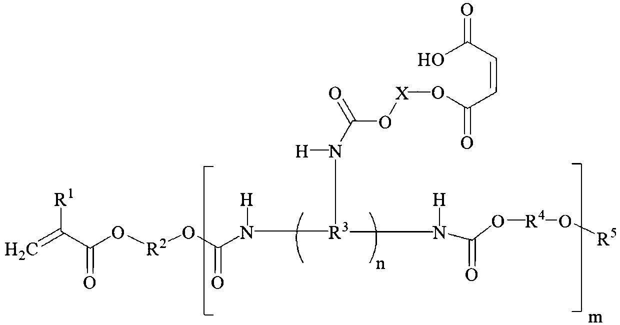 wherein
R¹ is hydrogen or a methyl group;
each of R², R³ and R⁴ is an organic group;
R⁵ is 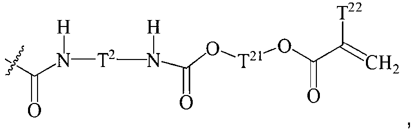 where T² is an organic group containing an isocyanate group or an organic group not containing an isocyanate group, T²¹ is an organic group, and T²² is hydrogen or a methyl group; and
X is -CH₂-CH₂-, -CH₂-CH₂-O-CH₂-CH₂-, or 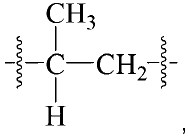 where each of m and n is not lower than 1.

7. The polyurethane (meth)acrylate resin containing the carboxylic acid group as claimed in claim 6, wherein R³ is 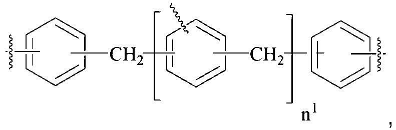 where n¹ is not lower than 1.

8. The polyurethane (meth)acrylate resin containing the carboxylic acid group as claimed in claim 7, wherein R² is an alkyl group.

9. The polyurethane (meth)acrylate resin containing the carboxylic acid group as claimed in claim 7, wherein each of R⁴ and T²¹ is an alkyl group or an alkyl ether.

10. The polyurethane (meth)acrylate resin containing the carboxylic acid group as claimed in claim 7, wherein the polyurethane (meth)acrylate resin containing the carboxylic acid group has an acid value ranging from 10 mgKOH/g to 40 mgKOH/g.

11. A method for preparing a polyurethane (meth)acrylate resin containing a carboxylic acid group, comprising a step of: subjecting a hydroxyl group of a monohydric alcohol containing a carboxylic acid group and a hydroxyl group of a (meth)acrylate containing the hydroxyl group to a condensation reaction with multiple isocyanate groups of a polyurethane resin containing the multiple isocyanate groups, the monohydric alcohol containing the carboxylic acid group being selected from hydroxyethyl maleate, (2-hydroxyethoxy)ethyl maleate, 2-hydroxypropyl maleate, or combinations thereof.

12. The method as claimed in claim 11, wherein the monohydric alcohol containing the carboxylic acid group and the (meth)acrylate containing the hydroxyl group are mixed to obtain a mixture, and then the mixture is subjected to the condensation reaction with the polyurethane resin containing the multiple isocyanate groups.

13. The method as claimed in claim 11, wherein the (meth)acrylate containing the hydroxyl group is reacted with the polyurethane resin containing the multiple isocyanate groups to obtain a reaction mixture, and then the monohydric alcohol containing the carboxylic acid group is reacted with the reaction mixture.

14. The method as claimed in claim 11, wherein the method further comprises subjecting a reaction component of a polyol material and a polyisocyanate material to a polycondensation reaction, so as to obtain the polyurethane resin containing the multiple isocyanate groups.

15. The method as claimed in claim 11, wherein the method further comprises subjecting a diol to a reaction with maleic anhydride, so as to obtain the monohydric alcohol containing the carboxylic acid group, the diol being selected from ethylene glycol, diethylene glycol, or glycerol.

16. The method as claimed in claim 11, wherein the (meth)acrylate containing the hydroxyl group is selected from hydroxyethyl acrylate, hydroxyethyl methacrylate, hydroxypropyl acrylate, hydroxypropyl methacrylate, or combinations thereof.

17. A curable composition, comprising the polyurethane (meth)acrylate resin containing the carboxylic acid group as claimed in any one of claims 4 to 10, and a polymerizable diluent monomer.

18. The curable composition as claimed in claim 17, wherein the polymerizable diluent monomer is selected from methyl acrylate, methyl methacrylate, ethyl acrylate, ethyl methacrylate, hydroxyethyl acrylate, hydroxyethyl methacrylate, hydroxypropyl acrylate, hydroxypropyl methacrylate, isobornyl acrylate, isobornyl methacrylate, cyclohexyl acrylate, cyclohexyl methacrylate, tetrahydrofurfuryl acrylate, tetrahydrofurfuryl methacrylate, styrene, methylstyrene, vinyltoluene, or combinations thereof.

19. A composite molding material, comprising a resin component, a fiber material, and a chemical thickener, the resin component being selected from the polyurethane (meth)acrylate resin containing the carboxylic acid group as claimed in any one of claims 4 to 10 or the curable composition as claimed in any one of claims 17 and 18.

20. The composite molding material as claimed in claim 19, wherein the chemical thickener is selected from an alkaline earth metal oxide, an alkaline earth metal hydroxide, or a combination thereof.
